# EUROPEAN PATENT APPLICATION

(11) **EP 1 347 401 A2**
(43) Date of publication of application: **24.09.2003**
(21) Application number: 03006097.4
(22) Date of filing: 19.03.2003
(51) Int. Cl.: G06F 17/60

(54) **Article management method and system**

(30) Priority: 20.03.2002 JP 2002077496
(71) Applicant: Hitachi, Ltd., Chiyoda-ku, Tokyo 101-8010 (JP)
(72) Inventor: Ogihara, Masaki, Hitachi Ltd., Int. Property Group, Chiyoda-ku, Tokyo 100-8220 (JP); Asai, Shojiro, Hitachi Ltd., Int. Property Group, Chiyoda-ku, Tokyo 100-8220 (JP)
(74) Representative: Strehl Schübel-Hopf & Partner

(57) **Abstract**

An article management method and system effectively using characteristic information of an article, wherein identifiers are provided for an article and a slip associated with the article, and article information of the article, the article identifier, and slip identifier are transmitted to a destination of the article. At the destination, a processing method for the received article is determined according to the article information specified in accordance with the slip identifier of the slip received together with the article.

## Description

### BACKGROUND OF THE INVENTION

### (1) Field of the Invention

The present invention relates to an article management method and system for managing articles called products, semi-finished products, intermediate products, and the like.

### (2) Description of Related Art

At the time of processing purchased materials or raw materials into products, in some cases, a material processing factory has to process the materials in accordance with each of the characteristics and attributes of the materials, because they have different characteristics even if they are classified into the same material type.

As a technique of quality control as one of characteristic controls of individual materials, a quality control system is known in which a material processing factory obtains inspection information of materials received from a material supplier via a network at the time of procuring materials from the material supplier. In the quality control system, the material processing factory checks obtained quality inspection information with predetermined reference information of the factory to obtain a result of the inspection of the materials, thereby determining whether the materials are acceptable or not.

An example of such a technique is disclosed in Japanese Patent Laid-open No. 2001-255927. In the prior art, inspection information of materials are used only for ordered material reception management and it is not considered to effectively use the inspection information.

### BRIEF SUMMARY OF THE INVENTION

An object of the invention is to provide an article management method and system capable of effectively using characteristic information of articles.

In an article management method according to the invention, identification information is attached to an article and a delivery slip, and the identification information of the article, article information of the article, and the identification information of the slip are associated with each other and transmitted to a destination of the article. As another embodiment, in an article management method according to the invention, the destination of the article is determined on the basis of the identification information of an article. As further another embodiment, in an article management method according to the invention, an article processing method is determined by using the article information corresponding to the identification information of the slip received with the article.

### BRIEF DESCRIPTION OF THE DRAWINGS

FIG. 1 is a diagram showing an example of a general configuration of an article management system according to a first embodiment.
FIG. 2 is a flowchart showing an example of a slip information processing according to the first embodiment.
FIG. 3 is a diagram showing an example of a data configuration of material information according to the first embodiment.
FIG. 4 is a diagram showing an example of a data configuration of a stock material information file according to the first embodiment.
FIG. 5 is a flowchart showing an example of order-receiving and shipping processes of a material supplier according to the first embodiment.
FIG. 6 is a flowchart showing an example of the order-receiving and shipping processes of the material supplier according to the first embodiment.
FIG. 7 is a diagram showing an example of a data configuration of order information according to the first embodiment.
FIG. 8 is a diagram showing an example of a data configuration of order-received information according to the first embodiment.
FIG. 9 is a diagram showing an example of a data configuration of shipment instruction information according to the first embodiment.
FIG. 10 is a diagram showing an example of the data configuration of delivery slip information according to the first embodiment.
FIG. 11 is a diagram showing an example of a delivery slip image according to the first embodiment.
FIG. 12 is a diagram showing an example of shipping material information according to the first embodiment.
FIG. 13 is a flowchart showing an example of a received-material information receiving process according to the first embodiment.
FIG. 14 shows the contents of an order information file in reception of received-material information according to the first embodiment.
FIG. 15 shows the contents of received-material information in reception of the received-material information according to the first embodiment.
FIG. 16 is a flowchart showing an example of carrying-in process, processing calculation, and processing according to the first embodiment.
FIG. 17 is a flowchart showing an example of carrying-in process, processing calculation, and material processing according to the first embodiment.
FIG. 18 shows an example of the contents of a processing template in the processing calculation according to the first embodiment.

### DETAILED DESCRIPTION OF THE INVENTION

Embodiments of an article management method and system according to the invention will be described hereinbelow with reference to the drawings.

### First Embodiment

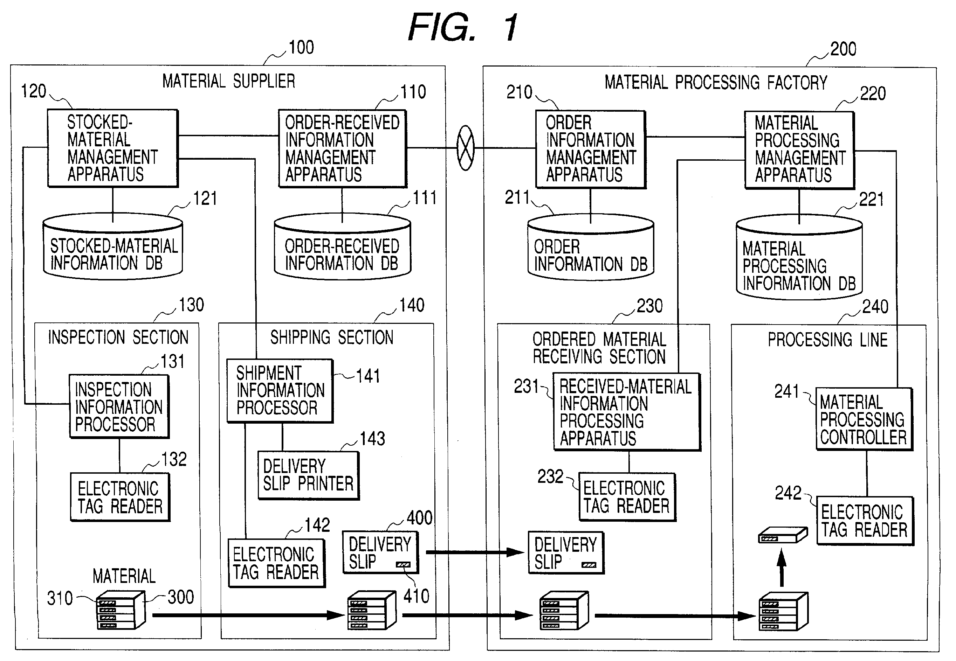

FIG. 1 is a diagram showing a general configuration of an article management system in transactions, for example, between a material supplier 100 and a material processing factory 200 to process received materials.

The article management system according to the embodiment is broadly divided into two systems; a first system constructed by various instruments disposed in the material supplier 100, and a second system constructed by various instruments disposed in the material processing factory 200.

The system of the material supplier 100 comprises a shipment processing system regarding a shipping process which includes a shipping section 140, a stock information processing system for managing stock information which includes a stocked-material management apparatus 120, and an order-received information processing system regarding an order-received information process which includes an order-received information management apparatus 110. The system of the material processing factory 200 comprises an ordered-material processing system regarding a carrying-in process which includes an ordered material receiving section 230, an order information processing system regarding an order information process which includes an order information management apparatus 210, and a material processing system regarding a material process which includes a material processing management apparatus 220.

Although blocks of FIG 1 are divided according to functions for easier understanding, the components in each system may be further divided or combined. For example, the stocked-material management apparatus 120 and the order-received information management apparatus 110 may be realized by a single apparatus. The first and second systems are properly connected via a predetermined communication line or communication network (hereinbelow, simply called "network"), and the components in the systems are also properly connected to each other via a network. Description will be given hereinbelow by applying steel as a material 300.

To each of the materials 300 manufactured by the material supplier 100, an electronic tag 310 is attached. The electronic tag 310 is, for example, a nonvolatile memory such as EEPROM or ROM for storing information therein. Although an electronic tag will be described as an example of a storage medium attached to the material in the embodiment, the tag is sufficient to record peculiar identification information on the basis of a unit of predetermined quantities of the materials 300 or on the unit basis of the material 300 as in the embodiment. For example, except for the electronic tag, a method of directly printing a bar code or serial number to a material may be employed. In the electronic tag 310, information for identifying the material is stored.

Although an electronic tag reader will be described as an example of an apparatus for reading out the information from the storage medium, any apparatus can be used as long as it can read the storage medium attached to the material or identification information recorded on the material.

"Transport" in the following description denotes transfer of materials such as material transfer between companies or transfer within a factory. Further, reception of a material transported on a reception side of the material will be called "carrying-in" and sending the material on a side of the material supplier will be called "shipment". A sender in a carrying-in operation denotes a location upstream of the location of the carrying-in operation in a carrying-in path. On the other hand, a destination in a shipping work indicates a location downstream of the location of the shipping work on a transport path.

### (1) Slip information processing in the first embodiment:

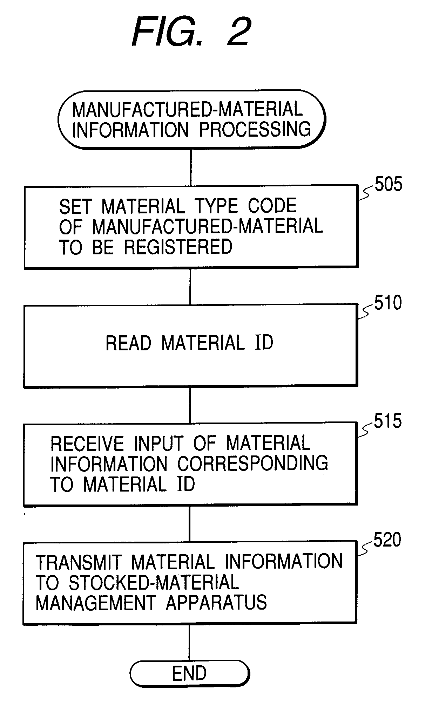

A slip information processing of the material supplier 100 in the first embodiment will be described by referring mainly to the flowchart of FIG. 2 and properly to other diagrams.

The inspection section 130 has an inspection information processor 131 for inspecting the quality of the material 300, and an electronic tag reader 132 connected to the inspection information processor 131. To the inspection section 130, materials to which the electronic tag 310 is attached are carried in.

In the inspection section 130, a worker sets a material type code from a terminal (not shown) of the inspection information processor 131 (step 505). The electronic tag reader 132 reads out material ID from the electronic tag 310 attached to the material 300. The material ID read out from the electronic tag 310 is correlated with the set material type code (step 510). To the inspection information processor 131, the results of the inspection of the material 300, such as component values and date of manufacture, are input as material information (step 515).

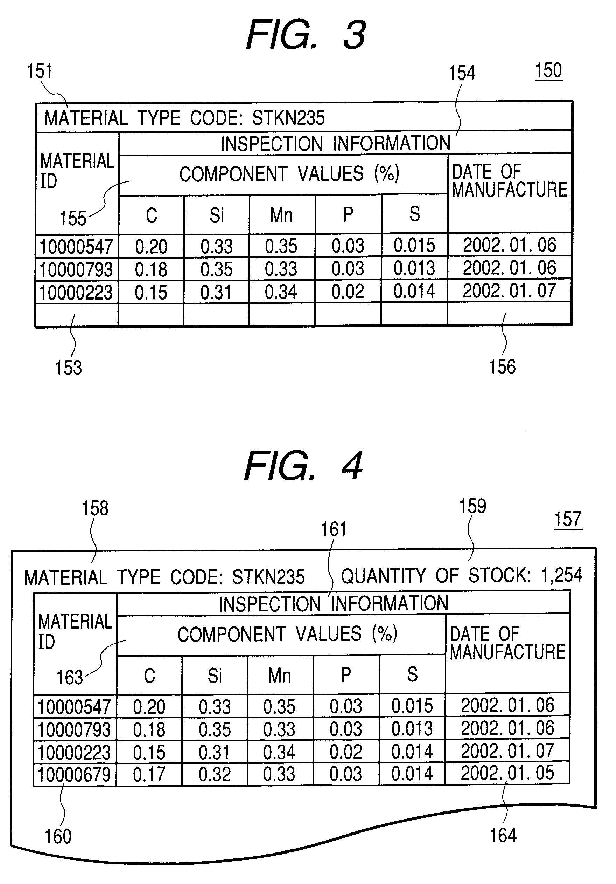

Material information 150 is comprised of, for example as shown in FIG. 3, a material type code 151, a material ID 153, and inspection information 154 corresponding to the material ID. The inspection information 154 includes component values 155 (C, Si, Mn, P, and S) of the material 300, date of manufacture 156 of the material 300 and, for example, dimensions, surface smoothness, and the like.

The inspection information processor 131 transmits the material information 150 to the stocked-material management apparatus 120 (step 520). Although FIG. 3 shows the material information in a form of a collection of a plurality of materials, the material information may be transmitted for each material. The stocked-material management apparatus 120 receives the material information 150 and stores it into a stocked-material information file 157 in a stocked-material information DB 121. The stocked-material information DB 121 is used to manage a stock status of the materials 300 corresponding to the material type code in the stocked-material information file 157.

The stocked-material information file 157 is comprised of, for example as shown in FIG. 4, a material type code 158, the quantity of stock 159, a material ID 160, and inspection information 161 corresponding to the material ID 160. The inspection information 161 includes not only component values 163 and date 164 of manufacture but also, for example, dimensions, surface smoothness, and the like.

As obviously understood from FIGS. 3 and 4, all of the information items except for the quantity of stock 159 in FIG. 4 is generated by the inspection information processor 131. The quantity of stock 159 indicates the number of data (the number of records) corresponding to the material ID 160 stored in the stocked-material information file 156.

The materials 300 subjected to the inspection processing are carried to a storage location corresponding to the material type code 151 and stored there. Storage location information indicative of the relation between the material type code 151 and the storage location is transmitted from the inspection information processor 131 to a shipment information processor 141 and stored in a shipment management apparatus 141. The storage location information is used to look for an ordered material on the basis of the material type code as will be described later.

Although it has been described on the premise that identification information is recorded in the electronic tag 310 in the embodiment, information other than the identification information, for example, inspection information can be also written in the electronic tag 310.

According to the above information processing, the material supplier 100 can manage the inspection information 161 of each of the materials 300 and the material processing factory 200 can obtain the inspection information 161 from the material supplier 100, thereby enabling the material processing by applying the inspection information 161 as will be described later.

### (2) Processing for ordering, order-receiving and shipping in the first embodiment:

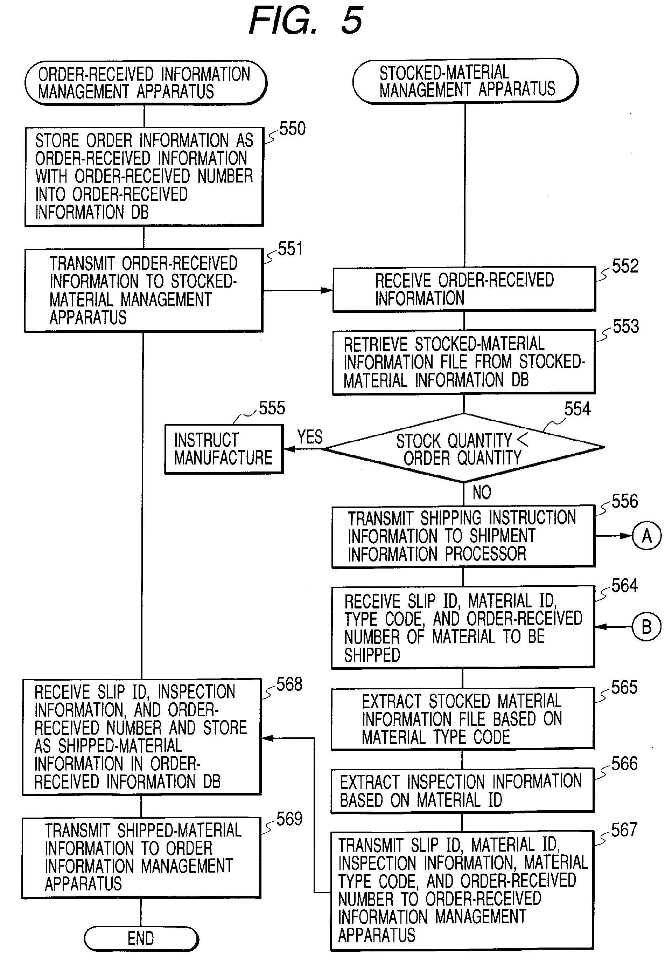

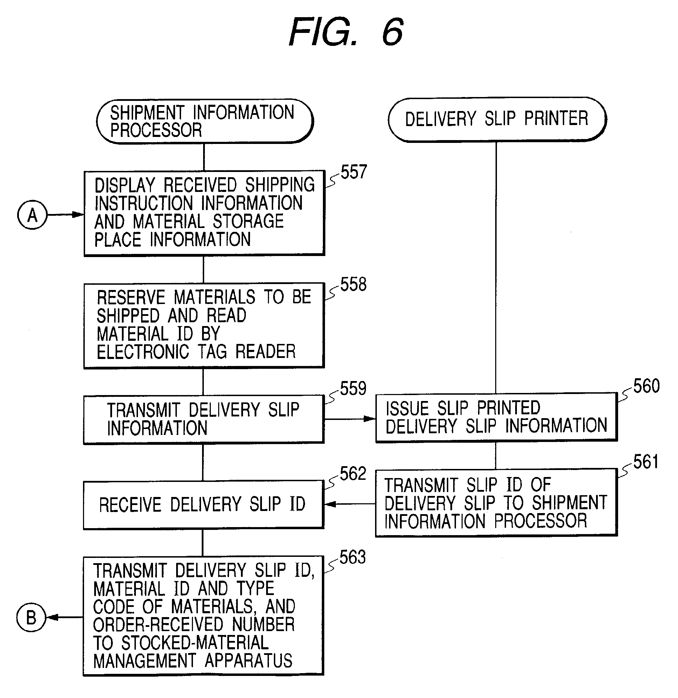

The ordering process in the material processing factory 200 and the order receiving and the shipping processes in the material supplier 100 will be described by referring mainly to the flowcharts of FIGS. 5 and 6 and properly to other drawings.

The material processing factory 200 orders the materials 300 by transmitting order information from the order information management apparatus 210 to the material supplier 100 via a network.

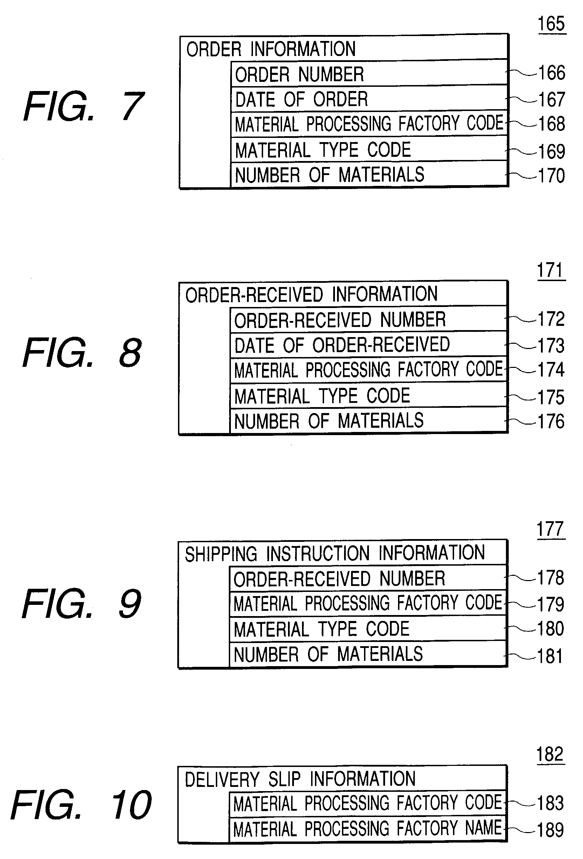

The order information 165 is comprised of, for example as shown in FIG. 7, order number 166, date of order 167, material processing factory code 168, material type code 169, the number of materials 170, date of delivery, and the other items. The order information 165 is stored in an order information DB 211 in the storage unit provided in the order information management apparatus 210.

The order-received information management apparatus 110 of the material supplier 100 stores the order information 165 received from the order information management apparatus 210 of the material processing factory 200 as order-received information 171 into an order-received information DB 111 (step 550).

The order-received information 171 is comprised of, for example as shown in FIG. 8, order-received number 172 (order number 166), date of order received 173, material processing factory code 174, material type code 175, the number of materials 176 (the number of materials 170) , the date of delivery, and the other items.

The order-received information management apparatus 110 transmits the order-received information 171 to the stocked-material management apparatus 120 (step 551). Upon receiving the order-received information 171 (step 552), the stocked-material management apparatus 120 detects the stocked material information file 157 by matching the material type code 175 indicated by the order-received information 171 with the material type code 158 in the stocked material information file 157 (step 553). When the quantity of stock 159 of the detected stocked-material information file 157 is less than the number of materials 176 (step 554), an instruction of manufacture is generated (step 555). On the other hand, when the quantity of stock 159 is more than the number of materials 176 (step 554) , shipping instruction information is transmitted to the shipment information processor 141 of the shipping section 140 (step 556).

Shipping instruction information 177 is comprised of, for example as shown in FIG. 9, order-received number 178, a material processing factory code 179, a material type code 180, and the number of shipped materials 181 (the number of order-received materials 176).

Upon receiving the shipping instruction information 177, the shipment information processor 141 reads out the storage location information of the material 300 corresponding to the material type code 180 by using the material type code 180 indicated in the shipping instruction information 177 as a key. The shipment information processor 141 displays the received shipping instruction information 177 and the storage location information on a display unit of the shipment information processor 141 (step 557).

A stock reserve worker reserves a necessary number of the materials 300 from the storage location of the materials corresponding to the material type code 180 by referring to the displayed storage location information and the number 181 of materials indicated in the shipping instruction information 177. At the time of reserving the materials in stock, the stock reserve worker reads out the material ID from the electronic tag 310 of the stocked material 300 by using an electronic tag reader 142 connected to the shipment information processor 141 and stores the read out information into the shipment information processor 141 (step 558).

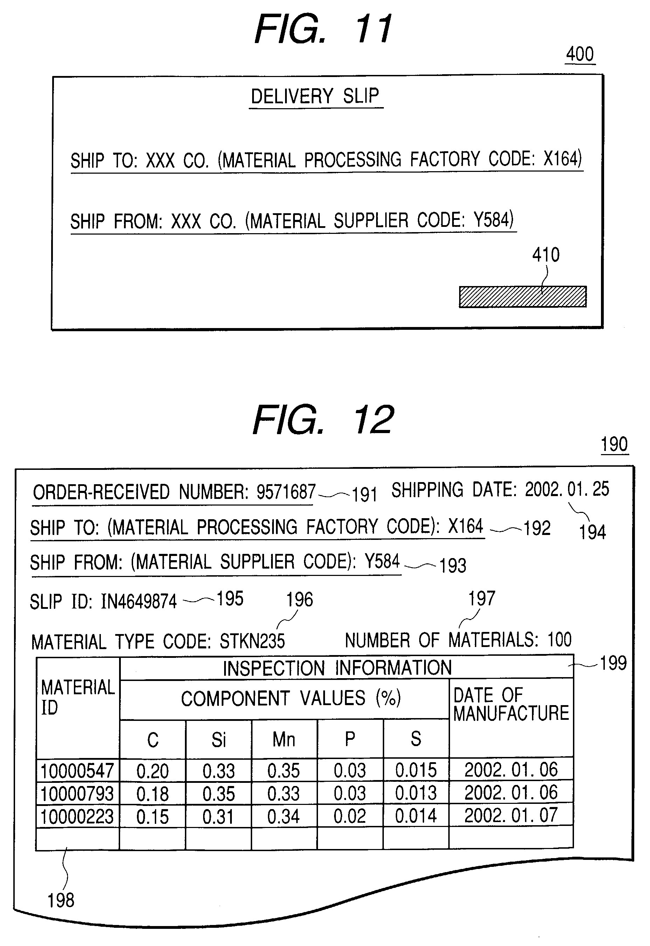

Upon receiving the material IDs of the number of materials to be shipped, the shipment information processor 141 transmits delivery slip information to a delivery slip printer 143 in order to issue a delivery slip (step 559). Delivery slip information 182 includes, for example as shown in FIG. 10, a material processing factory code 183 and a material processing factory name 184. The shipment information processor 141 also transmits to the delivery slip printer 143 the material processing factory name 184 together with the delivery slip information by using a table for indicating the correspondence between the material processing factory code 183 and the material processing factory name 184 stored in the storage in advance.

When the delivery slip information 182 is received, the delivery slip printer 184 issues a delivery slip 400 on which the delivery slip information 182 is printed (step 560). The contents of printing on the delivery slip 400 includes, for example as shown in FIG. 11, information to be used by an ordered-material receiving worker of the material processing factory 200 at the time of checking the materials 300 received. For convenience of the worker, the ID of the material 300 may be also printed on the delivery slip 400. Thus, the worker can check the received materials by collating the material ID of a received material with the material ID printed on the delivery slip 400.

The delivery slip 400 may be used as a certificate of an inspection by printing inspection information. In this case, it is able to judge whether the slip is genuine or not by checking whether identification information can be normally read out from the electronic tag attached to the slip, and the reliability of the certification information indicative of the result of the inspection is improved. For example, in the case where identification information cannot be read out from an electronic tag attached to the slip, it is determined that the slip is not genuine.

The delivery slip printer 143 reads out the slip ID from an electronic tag 410 attached to the delivery slip 400 issued and transmits the slip ID to the shipment information processor 141 (step 561). Upon receiving the slip ID (step 562), the shipment information processor 141 transmits the received slip ID, the material ID and the material type code of the materials 300 to be shipped, and the order-received number to the stocked-material management apparatus 120 (step 563). The materials 300 with which the delivery slip 400 is associated are shipped from the shipping section.

When the information is received from the shipment information processor 141 (step 564), the stocked-material management apparatus 120 extracts the stocked-material information file 157 corresponding to the material type code of the shipped material by matching the received material type code with the material type code 158 of the stocked-material information file 157 (step 565). The stocked-material management apparatus 120 extracts the inspection information 161 corresponding to the material ID received from the shipment information processor 141, from the stocked-material information file 157 extracted (step 566).

The stocked-material management apparatus 120 transmits the slip ID, the material ID of the material 300 shipped, inspection information corresponding to the material ID, material type code, and order-received number to the order-received information management apparatus 110 (step 567). The stocked-material management apparatus 120 deletes the inspection information corresponding to the transmitted material ID from the stocked-material information file 157 and decreases the quantity of stock 159 of the stocked-material information file 157 in accordance with the quantity of shipment.

When the slip ID, material ID of the shipped material 300, and inspection information, material type code, and order number corresponding to the material ID are received, the order-received information management apparatus 110 stores the received information as shipped-material information in the order-received information DB 111 (step 568). As shown in FIG. 12, for example, shipped-material information 190 includes order-received number 191, shipment destination (material processing factory code) 192, shipment source (material supplier code) 193, shipping date 194, slip ID 195, material type code 196, the number of shipped materials 197, material ID 198 of the shipped material 300, and inspection information 199 corresponding to the material ID 198. The order-received information management apparatus 110 transmits the shipped-material information 190 to the order information management apparatus 210 of the material processing factory 200 as a shipment destination (step 569).

By the above-described shipping process, according to the embodiment, it is able to correlate the material ID of the individual materials 300 shipped by the material supplier 100 with the inspection information thereof, and to manage the characteristics such as the quality of materials having variation in the characteristics even if they belong to the same material type. By correlating the material ID of the shipped material 300 with the delivery slip ID, a carrying-in process in the material processing factory 200 can be performed efficiently. The carrying-in processing in the material processing factory 200 will be described hereinlater.

### (3) Receiving process of received-material information in the first embodiment:

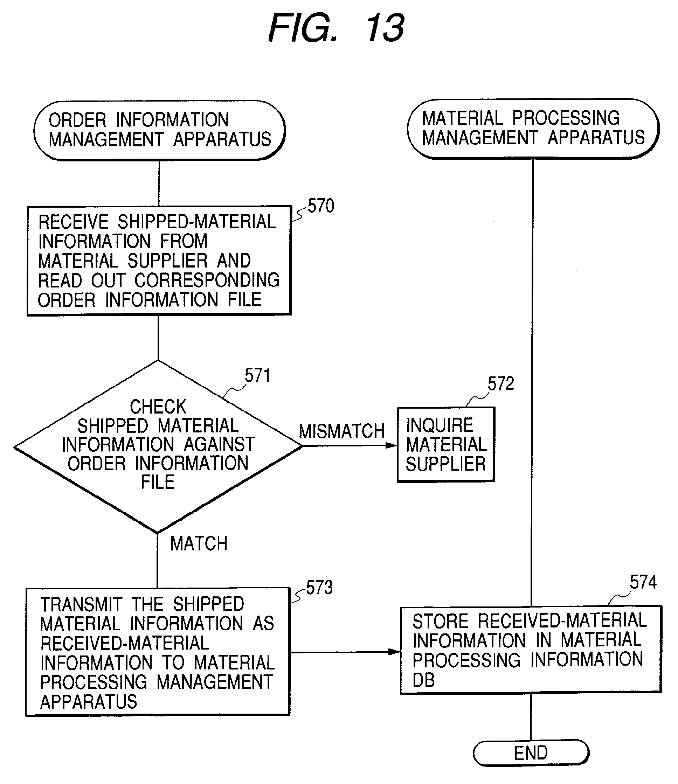

A receiving process of received-material information performed in the material processing factory 200 will be described with reference mainly to the flowchart of FIG. 13 also properly to the other diagrams.

The order information management apparatus 210 of the material processing factory 200 reads out order information file stored in the order information DB 211 by matching the order-received number 191 indicated in the shipped-material information 190 received from the order-received information management apparatus 110 of the material supplier 100 with order number 251 of an order information file 250 (step 570).

In this case, it is assumed that, as a precondition, the order-received information management apparatus 110 of the material supplier 100 employs, as the order-received numbers 191 of the shipped-material information 190, the same numbers as the order numbers 251 of the order information file 250. In the case where the material supplier 100 adopts order-received numbers different from the order numbers, the order numbers used on the material processing factory 200 side are stored so as to correspond with order-received numbers which are internally used in the material supplier 100 in the form, for example, by providing an order number column in the order-received information 171 in FIG. 8.

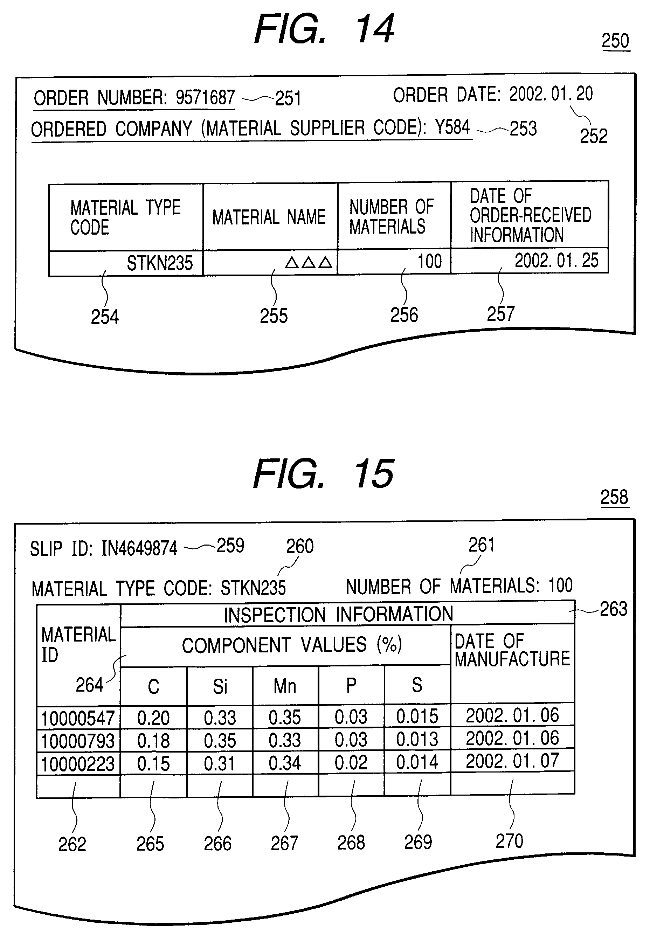

The order information file 250 includes, for example, as shown in FIG. 14, order number 251, order date 252, ordered company (material supplier code) 253, material type code 254, material name 255, the number of ordered materials 256, and date 257 of order-received information.

The order information management apparatus 210 checks whether or not there is a mismatch between order information and order-received information with respect to each of the items of the shipment source 193, material type code 194, and the number of shipped materials 195 of the shipped-material information 190 and the ordered company 253, material type code 254, and the number of materials 256 in the order information file 250 (step 571). When a mismatch is found in the collation, the order information management apparatus 210 inquires the material supplier 100 of the contents of the order-received information (step 572). If no mismatch is found in the collation, date data is set in the date 257 of order-received information in the order information file 250, and the shipped-material information 190 is transmitted as order-received material information to the material processing management apparatus 220 (step 573).

The received-material information 258 includes, for example as shown in FIG. 15, slip ID 259, material type code 260, the number of received-materials 261, material ID 262, and inspection information 263 corresponding to the material ID 262. The inspection information 263 is comprised of, for example, items such as component values 264 (C 265, Si 266, Mn 267, P 268, and S 269) and date 270 of manufacture. Upon receiving the received-material information 258, the material processing management apparatus 220 stores it into the material processing information DB 221 (step 574).

### (4) Carrying-in processing and received-material processing in material processing factory in the first embodiment:

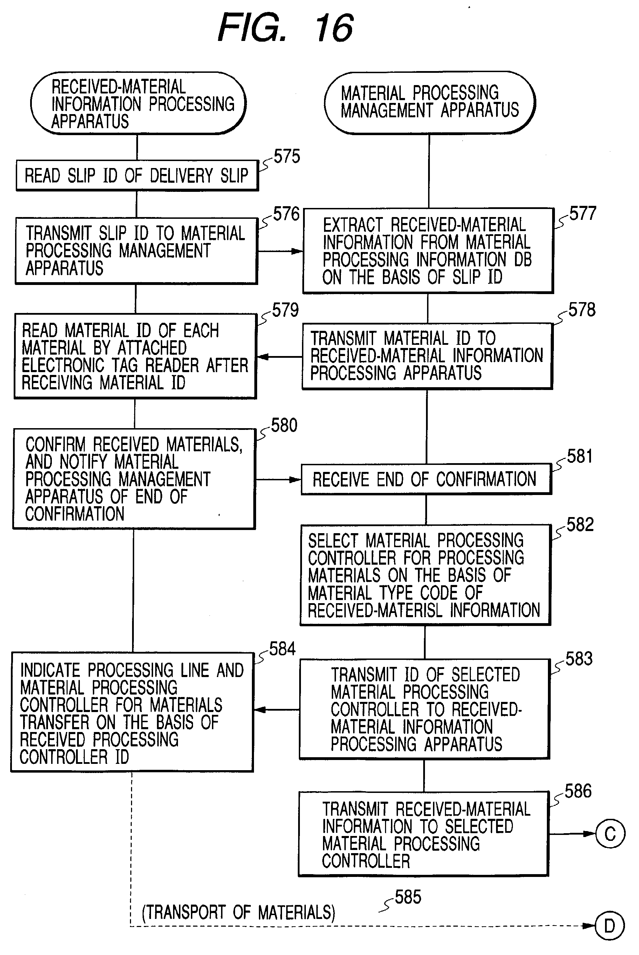

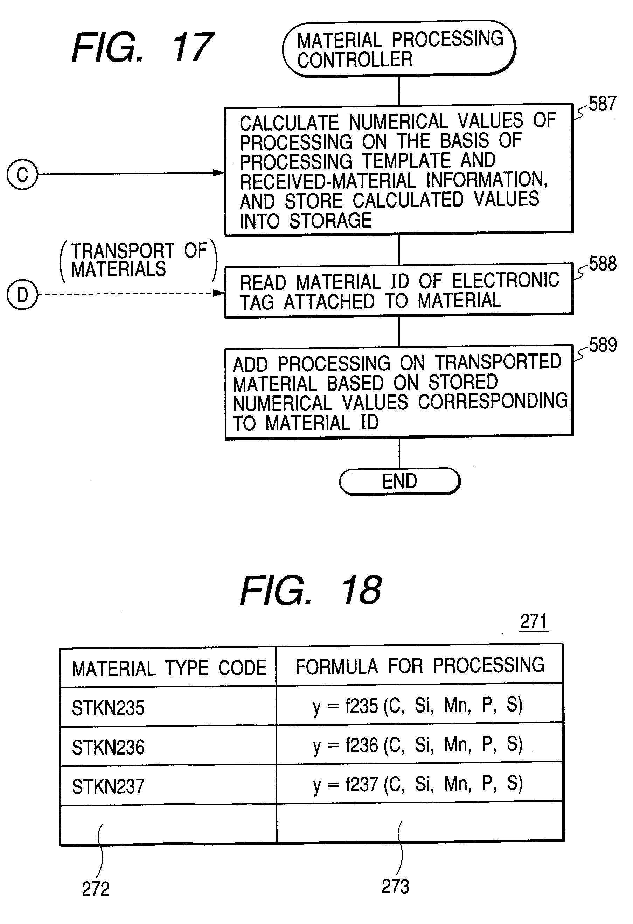

The carrying-in process of the material processing factory 200 and the material processing performed on the carried material 300 will be described with reference mainly to the flowcharts of FIGS. 16 and 17 and properly to other diagrams.

The material processing factory 200 receives the materials 300 shipped from the material supplier 100 together with the delivery slips 400. An ordered-material receiving worker checks the destination of shipment and the source of shipment printed on the delivery slip 400 and reads out the slip ID from the electronic tag 410 of the delivery slip 400 by using the electronic tag reader 232 connected to a received-material information processing apparatus 231 installed in the ordered material receiving section 230 (step 575). The received-material information processing apparatus 231 transmits the slip ID to the material processing management apparatus 220 (step 576).

In the case where the slip ID 259 cannot be read out or the received-material information 258 corresponding to the slip ID 259 read out is not stored in a material processing information DB 221, the ordered-material receiving worker can notify the supplier of the material 300 that the delivery slip 400 is judged to be spurious. In this case, the ordered-material receiving worker may return the materials 300 to the material supplier 100.

The materials 300 are delivered by the material supplier 100 or another intermediate company on a distribution path other than the material supplier 100. Accordingly, the notification of spurious delivery slip 400 may be informed to the material supplier 100, for example, by sending a received-material error message including the material ID 262 of the material with which the delivery slip 400 is associated. In this case, the order-received information management apparatus 110 of the material supplier 100 can judge the propriety of issuance of the delivery slip by a procedure of, for example, reading out the shipped-material information 190 stored in the order-received information DB 111 according to the notified material ID 262 and confirming the destination of shipment.

The material processing management apparatus 220 reads out the received-material information 258 corresponding to the received-material 300 from the material processing information DB 221 by matching the slip ID received from the received-material information processing apparatus 231 with the slip ID 259 indicated in the received-material information 258 (step 577). The material processing management apparatus 220 transmits the material ID 262 indicated in the received-material information 258 to the received-material information processing apparatus 231 (step 578). Upon receiving the material ID 262, the received-material information processing apparatus 231 reads out the material ID from the electronic tag 310 of each material 300 by the electronic tag reader 232 connected to the received-material information processing apparatus 231 (step 579), and confirms the reception of the ordered-material by collating the resultant material ID with the ID 262 of a material which is preliminarily scheduled be delivered.

In the confirmation of the ordered-material reception, for example, a material scheduled to be delivered and having the material ID 262 which does not match any of the material IDs read out from the electronic tags 310 (missing material) and a material of which the material ID read out from the electronic tag 310 does not match any of the material IDs 262 scheduled to be delivered (erroneously received material) are checked.

When there are no missing material nor erroneously received material, the received-material information processing apparatus 231 notifies the material processing management apparatus 220 of end of confirmation of the ordered-material reception (step 580). When a mis sing material or an erroneously received material is found in the checks, the received-material information processing apparatus 231 transmits the material ID 262 of the missing material scheduled to be delivered or the material ID read out from the electronic tag of the erroneously received material to the material processing management apparatus 20 or outputs a message on the display screen.

By transmitting inquiry information including the material ID received via the order information management apparatus 210 to the material supplier 100, the material processing management apparatus 220 can notify the material supplier 100 of the missing material and erroneous reception and urge the material supplier 100 to deal with the problem. The material processing factory 200 returns the erroneously received material to the material supplier 100 as necessary. The received-material information processing apparatus 231 notifies the material processing management apparatus 220 of end of confirmation of ordered-material reception (step 580).

In the ordered-material receiving process, a worker for checking the received material can get the inspection information 263 of the received material 300 by reading out the received-material information 258 from the material processing information DB 221 according to the slip ID of the slip 400 associated with the received material 300.

In the above-described step 575, the slip ID read out from the delivery slip 400 may be transmitted to the order-received information management apparatus 110 of the material supplier 100, thereby to receive the received-material information 258 from the order-received information management apparatus 110 in response to the delivery slip ID. In this case, the material supplier 100 can know that the shipped material 300 arrives at the material processing factory 200. Further, the order-received information management apparatus 110 can store information indicating that the shipped material 300 has been delivered in the shipped-material information 190 corresponding to the slip ID received from the order information management apparatus 210 of the material processing factory 200. Therefore, in the case where the same slip ID is received in another occasion, a delivery slip corresponding to the slip ID received can be determined as a false slip.

Alternately, the material ID read out from the received material 300 may be transmitted to the order-received information management apparatus 110 of the material supplier 100. In this case, the material supplier 100 can know the presence or absence of a delivery error. By storing information indicating that a material corresponding to the received material ID 262 has been already delivered, when the same material ID is received in another occasion, the order-received information management apparatus 110 can judge a material corresponding to the material ID as a false material . In other words, the identification information of a delivery slip, the article information and identification information of the article are received from the shipper in response to transmission of the identification information of the article read out from the electronic tag to the shipper.

When the end of confirmation on the ordered-material reception is received (step 581), the material processing management apparatus 220 selects a material processing controller 241 to process the received material 300 on the basis of the material type code 260 of the received-material information 258 by using information indicating the corresponding relation between the material type codes and the material processing controllers 241 prestored in the material processing information DB 221 (step 582). The material processing management apparatus 220 transmits the ID of the selected material processing controller 241 to the received-material information processing apparatus 231 (step 583).

The received-material information processing apparatus 231 displays a processing line 240 and the material processing controller 241 to which the material 300 should be carried on a display unit of the received-material information processing apparatus 231 on the basis of the received material processing controller ID (step 584). The ordered-material reception worker carries the received materials 300 to the material processing controller 241 of the processing line 240 displayed as a destination of the materials (step 585).

The material processing management apparatus 220 transmits the received-material information 258 to the selected material processing controller 241 (step 586) . The material processing controller 241 calculates a processing numerical value on the basis of the notified received-material information 258. The processing numerical value is calculated by using, for example, a processing template 271 prepared in advance in the storage unit of the material processing controller 241 and numerical values of C, Si, Mn, P, and S indicated as the component values 264 in the received-material information 258.

The processing template 271 defines, for example as shown in FIG. 18, a processing formula 273 corresponding to a material type code 272. By substituting the value of each component indicated by the component value 264 for the processing formula 273, a processing numerical value is determined. The calculated processing numerical value is stored correspondingly to the material ID into a storage unit of the material processing controller 241 (step 587).

The material processing controller 241 reads out the material ID from the electronic tag 310 attached to the material 300 carried from the ordered material receiving section 230 by the electronic tag reader 242 connected to the controller 241 (step 588). The material processing controller 241 reads out the processing numerical value stored in the storage unit in accordance with the material ID read out from the electronic tag and starts the processing on the material 300 (step 589). More specifically, in step 589, the material processing controller 241 confirms that the material is set in a processing machine connected to the material processing controller 241, sends the processing numerical value to the processing machine, and operates the processing machine to process the material.

As examples of the processing, there are bending, cutting, and bonding of materials, for example. In the case of bending, for example, occurrence of a flex crack varies depending on the thickness of the material. Consequently, the ratio of a bend radius or processing temperature to the thickness can be adjusted by the processing numerical value. In the case of cutting, toughness and brittleness changes depending on the composition ratio of a material. Therefore, a pressing force of a blade in punching may be changed according to the composition ratio of a material, or the processing on a broken-out section after cutting can be changed according to the composition ratio of a material or a bend radius ratio. In the case of bonding, for example, a proper torque or the like in a frictional agitation junction and proper processing temperature, pre-heating, cooling speed, and the like in welding can be changed according to the composition ratio. Therefore, considerable hardening or softening of the material due to thermal effect can be avoided.

As described in the examples of processing, the processing numerical value (parameter) for operating the processing machine varies according to the characteristics of the material. The material processing controller 241 has a function of determining such a processing numerical value, that is, a processing method.

The material processing factory 200 transmits order information to the material supplier 100 on the basis of production planning and the quantity of materials to be processed. The processes after making an order are as described above. The material processing factory 200 may transmit order information including information of designating the kind of processing to be performed on the ordered material in the factory to the material supplier 100. In this case, the material processing factory 200 omits the material type code from the order information, and the material type code is determined by the material supplier 100 in accordance with the desired processing, so that a work of selecting the material becomes unnecessary for the material processing factory 200.

It is also possible to send information designating the kind of a processing to be performed on the ordered material in the material processing factory 200 together with the order information transmitted from the factory. The material ID is correlated with the processing designated in the shipping information transmitted from the material supplier 100. In this case, the material processing factory 200 can determine the processing to be performed on the received material 300 by referring to the shipping information corresponding to the received material.

The term "inspection information" used in the embodiment is called variously such as quality information, characteristic information, attribute information or, simply, material information or article information in accordance with a material handled, a process, or the like. According to the processing of the embodiment, the material processing controller 241 can automatically set a processing method adapted to the material 300 by using the inspection information of the material 300 received from the material supplier 100. Thus, the factory can processes the material 300 accurately, promptly, and efficiently.

### Second Embodiment

Although steel has been exemplified as the material 300 in the foregoing first embodiment, there are other embodiments in which the material 300 carried into the material processing factory is an intermediate product such as a chemical. In a second embodiment, a chemical will be described as an example. In the second embodiment, the material supplier 100 in the first embodiment will be called a subcontractor 100 and the material 300 will be called a chemical 300.

The material processing factory 200 transmits, as order information, information including a chemical composition of a chemical to the subcontractor 100 and stores the information as an order information file in a storage means. Upon receiving the order information, the subcontractor 100 prepares the chemical of a chemical composition designated in the order information or reserves the chemical from a stock. In order to distinguish the ordered chemical from other chemicals, the subcontractor 100 writes the chemical ID as identification information of the chemical into the storage medium 310 adhered to, for example, a container of the chemical. The shipping process may be performed in a manner similar to that of steel in the first embodiment.

In the ordered-material receiving process, the slip ID is read out from the storage medium adhered to a slip and information of the chemical composition of the received chemical is read out from the processing information DB by using the slip ID read out. On the basis of the information of the chemical composition thus read out, the received chemical is carried to a processing line or storage section (not shown) . In the processing, the chemical ID is read out from the medium 310, and information including the chemical composition of the chemical is read out from the process information DB 221 according to the chemical ID. The chemical composition is used for setting processing parameters. With such a configuration, collation between order information and ordered-material information is facilitated. Further, the worker does not have to input the chemical composition from an input device, so that the work efficiency is improved.

According to the invention, by adding the slip ID to a delivery slip, received-material information and other information corresponding to one or more materials can be read out from the database DB by using the slip ID as a search key. In the process from shipment to delivery, since it is sufficient to manage materials in a slip ID unit, the worker can easily manage the shipped materials without aware of the material ID of each material.

The format of shipped-material information may be changed depending on the destination. In this case, for example, destination identification information such as the material processing factory code 174 is stored in correspondence with the format of shipped-material information in a shipped-material information format DB. When order information is received from the material processing factory, the destination identification information such as a material processing factory code is read out from the order information, and a format information corresponding to the material processing factory code is read out from the shipped-material information format DB to create shipped-material information.

With the configuration, the material supplier can provide attentive services to the customers by employing the format requested by the material processing factory and changing the contents of the format to be written in accordance with the type of a shipped article. According to the invention, it is able to effectively use the characteristic information of articles.

## Claims

1. An article management system comprising:
a first reader for reading out slip identification information from a slip associated with an article;
a second reader for reading out article identification information attached to the article;
a storage device for storing the article identification information and article information as to the article, the information being correlated to each other; and
a transmitter for transmitting to a destination of the article via a network, the slip identification information, and the article identification information and the article information read out from said storage device.

2. The article management system according to claim 1, wherein said first reader for reading out the slip identification information and said second reader for reading out the article identification information are the same type.

3. An article management system comprising:
a first reader for reading out slip identification information from a slip associated with an article;
a second reader for reading out article identification information attached to said article;
a storage device for storing the slip identification information, the article identification information and article information as to the article, the information being correlated with each other;
means for reading out the article identification information and article information from said storage device according to the slip identification information read out by said first reader; and
means for determining a designation of said article on the basis of a result of collation between the article identification information read out from said storage device and the article identification information read out by said second reader.

4. The article management system according to claim 3, wherein said first reader for reading out the slip identification information and said second reader for reading out the article identification information are the same type.

5. The article management system according to claim 3, wherein the information stored in said storage device is the slip identification information, the article identification information and the article information preliminarily received from a supplier of the article.

6. The article management system according to claim 3, further comprising means for notifying to the supplier of, when the slip identification information cannot be read out from a slip, the article identification information of the article with which the slip is associated to inform that the slip is determined as spurious.

7. An article management system comprising:
a first reader for reading out slip identification information of a slip associated with an article;
a second reader for reading out article identification information attached to the article;
a storage device for storing the article identification information, article information as to the article and the slip identification information, the information being correlated with each other;
means for reading out the article information from said storing device according to slip identification information read out by said first reader; and
means for determining a method of processing to be performed on the article, on the basis of the article information read out from the storage device.

8. The article management system according to claim 7, wherein said first reader for reading out the slip identification information and said second reader for reading out the article identification information are the same type.

9. An article management method comprising the steps of:
inputting article identification information attached to an article to be shipped;
reading out slip identification information from a slip associated with said article;
storing article information and the identification information of the article to be shipped in a storage in association with each other; and
transmitting, to a destination of the article via a network, the slip identification information read out from the slip, the article identification information and article information of the article which is corresponding to the slip and read out from the storage.

10. An article management method comprising the steps of:
storing article information and identification information of an article, and slip information of a slip associated with the article in a storage, the information being correlated with each other;
inputting the slip identification information read out from a slip associated with a received article;
reading out the article identification information and the article information of the received article from said storage, according to the slip identification information input;
inputting the article identification information attached to the received article with which the slip is associated; and
determining a designation of the received article on the basis of a result of collation between the article identification information read out from said storage and the article identification information input.

11. The article management method according to claim 10, wherein the information stored in said storage is preliminarily received from a supplier of the article.

12. The article management method according to claim 10, further comprising the step of notifying to the supplier of, when the slip identification information cannot be read out from said slip, the article identification information of the received article to inform that the slip is not genuine.

13. An article management method comprising the steps of:
storing slip identification information of a slip associated with an article, and article identification information and article information of the article in a storage device, the information being correlated with each other;
inputting the slip identification information of the slip;
reading out the article identification information and the article information of the article from said storage device according to the slip identification information input;
inputting the article identification information attached to the article; and
determining a processing method to be performed on the article on the basis of the article information corresponding to the input article identification information, that was read out from said storage device according to the slip identification information.

14. An article management method comprising the steps of:
storing slip identification information of a slip associated with an article, and article identification information and article information of the article in a storage device, the information being correlated with each other;
inputting the slip identification information of the slip when the article is received;
reading out from said storage device, the article identification information and the article information of the received article corresponding to the slip identification information input;
inputting the article identification information of the received article; and
determining a destination of the received article on the basis of a result of collation between the article information read out and the article identification information input.
